# EUROPEAN PATENT APPLICATION

(11) **EP 4 481 565 A1**
(43) Date of publication of application: **25.12.2024**
(21) Application number: 23217915.0
(22) Date of filing: 19.12.2023
(51) Int. Cl.: G06F 9/455

(54) **APPARATUS AND METHOD FOR EMULATING OR PARA VIRTUALIZING A PHYSICAL FUNCTION OF A RESOURCE**

(30) Priority: 19.06.2023 US 202318337089
(71) Applicant: Intel Corporation, Santa Clara, CA 95054 (US)
(72) Inventor: KOTARY, Karunakara, Portland, OR 97229 (US); SINGH, Arun Kumar, Portland, OR 97229 (US); POORNACHANDRAN, Rajesh, Portland, OR 97229 (US)
(74) Representative: 2SPL Patentanwälte PartG mbB

(57) **Abstract**

It is provided an apparatus comprising interface circuitry, machine-readable instructions, and processing circuitry to execute the machine-readable instructions. The machine-readable instructions comprise instructions to receive a request of a virtual machine to access a resource of a network node, determine whether a number of available virtual functions associated to the resource falls below a predefined threshold and, if it is determined that the number of available virtual functions falls below the predefined threshold, emulate and/or para virtualize a physical function associated to the resource. The machine-readable instructions further comprise instructions to provide access to the resource via the emulated and/or para virtualized physical function for the virtual machine.

## Description

### Background

A number of virtual functions of a resource in a network node is usually limited. When all virtual functions are occupied, new requests for access to the resource are not served and are denied. This is especially critical in a quality-of-service sensitive environment. Hence, there may be a demand for improved resource control.

### Brief description of the Figures

Some examples of apparatuses and/or methods will be described in the following by way of example only, and with reference to the accompanying figures, in which
Figs. 1a and 1b illustrate an example of an apparatus for emulating and/or para virtualizing a physical function of a resource;
Fig. 2 illustrates an example of a conventional IO (input/output) device;
Fig. 3 illustrates an example of an improved IO device;
Fig. 4 illustrates an example of an architecture of an apparatus for emulating and/or para virtualizing a physical function of a resource;
Fig. 5 illustrates an example of a method for emulating and/or para virtualizing a physical function of a resource;
Fig. 6 illustrates another example of a method for emulating and/or para virtualizing a physical function of a resource;
Fig. 7 illustrates an example of a configuration of a network node; and
Fig. 8 illustrates an example of a negotiation between virtual machines.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

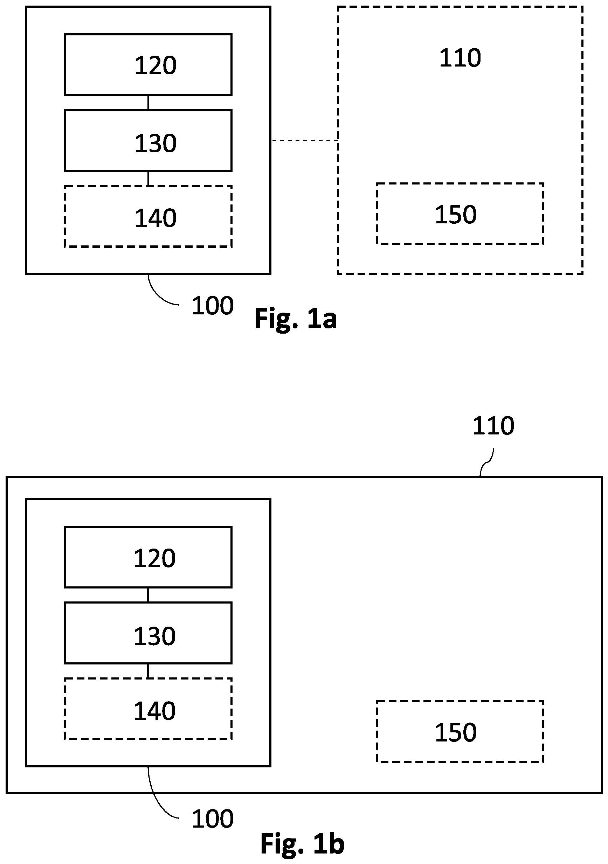

**Fig. 1a** shows a block diagram of an example of an apparatus 100 or device 100 communicatively coupled to a computer system 110. **Fig. 1b** shows a block diagram of an example of a computer system 110 comprising an apparatus 100 or device 100.

The apparatus 100 comprises circuitry that is configured to provide the functionality of the apparatus 100. For example, the apparatus 100 of Figs. 1a and 1b comprises interface circuitry 120, processing circuitry 130 and (optional) storage circuitry 140. For example, the processing circuitry 130 may be coupled with the interface circuitry 120 and with the storage circuitry 140.

For example, the processing circuitry 130 may be configured to provide the functionality of the apparatus 100, in conjunction with the interface circuitry 120 (for exchanging information, e.g., with other components inside or outside the computer system 110) and the storage circuitry 140 (for storing information, such as machine-readable instructions).

Likewise, the device 100 may comprise means that is/are configured to provide the functionality of the device 100.

The components of the device 100 are defined as component means, which may correspond to, or implemented by, the respective structural components of the apparatus 100. For example, the device 100 of Figs. 1a and 1b comprises means for processing 130, which may correspond to or be implemented by the processing circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

In general, the functionality of the processing circuitry 130 or means for processing 130 may be implemented by the processing circuitry 130 or means for processing 130 executing machine-readable instructions. Accordingly, any feature ascribed to the processing circuitry 130 or means for processing 130 may be defined by one or more instructions of a plurality of machine-readable instructions. The apparatus 100 or device 100 may comprise the machine-readable instructions, e.g., within the storage circuitry 140 or means for storing information 140.

For example, the storage circuitry 140 or means for storing information 140 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

The interface circuitry 120 or means for communicating 120 may correspond to one or more inputs and/or outputs for receiving and/or transmitting information, which may be in digital (bit) values according to a specified code, within a module, between modules or between modules of different entities. For example, the interface circuitry 120 or means for communicating 120 may comprise circuitry configured to receive and/or transmit information.

For example, the processing circuitry 130 or means for processing 130 may be implemented using one or more processing units, one or more processing devices, any means for processing, such as a processor, a computer or a programmable hardware component being operable with accordingly adapted software. In other words, the described function of the processing circuitry 130 or means for processing 130 may as well be implemented in software, which is then executed on one or more programmable hardware components. Such hardware components may comprise a general-purpose processor, a Digital Signal Processor (DSP), a micro-controller, etc.

The interface circuitry 120 is configured to receive a request of a virtual machine (VM) to access a resource of a network node 150, e.g., on the computing system 110. The interface circuitry 120 may receive the request from the computing system 110 itself or from an external device (e.g., a user device) via any communicative coupling (wired or wireless).

The network node 150 may be a physical device and/or a software application which is configured to send, receive, or forward data over a computer network coupled to the computing system 110. The network node 150 may include devices such as computers, routers, switches, hubs, servers, and other network components. The network node 150 may connect multiple components of the computing system 110 with each other or the computing system 110 with an external computing system. The network node 150 may provide, for instance, a wired connection such as an Ethernet cable or a fiber optic link, and/or a wireless connection such as Wi-Fi (Wireless Fidelity) or a cellular network. In some examples, the network node 150 comprises or is a PCIe (Peripheral Component Interconnect Express) bus.

The resource of the network node 150 may be a device or a capability of the network node 150 which accessible for other network nodes or users of the network node 150 (where users are, for instance, virtual machines or an operating system). The resource may have a unique identifier that is used to locate and access the resource. The resource may also have additional properties, such as access permissions, which determine how it can be used. In order for a resource to be shared with other network nodes or users, it may be made available on the computer network, e.g., through resource sharing. This may involve configuring the network node 150 to allow other network nodes or users to access the resource, and, optionally, setting up access permissions and security measures to ensure that the resource is used in the intended way. In some examples, the resource is a bandwidth of a PCIe bus.

The VM may be a software emulation of a computing system that can run applications and operating systems in an isolated environment. The VM may be a software abstraction of a physical computer that is created by a virtualization layer running on a host computer, which may be the computing system 110 or an external computing system. For instance, the host computer may have installed a virtualization layer, e.g., a hypervisor or a virtual machine monitor (VMM), in which the virtual machine is created, operated and managed. While running applications, the VM may interact with other VMs or with hardware components coupled to the network node 150. Thereby, the VM may eventually need access to the resource of the network node 150.

The processing circuitry 130 is configured to determine whether a number of available virtual functions associated to the resource falls below a predefined threshold.

For instance, the network node 150 may use a hardware-based virtualization technology for creating virtual functions (VFs) that allow the resource to appear as multiple resources to an operating system of the computing system 110 and to the VM. Each of the VFs can be assigned to a respective VM. Each VF may appear to the VM as a separate physical resource, e.g., with an own MAC (Media Access Control) address, device driver, or alike. The hardware-based virtualization technology may enable the VM to access the VF directly, i.e., without a need for emulation or translation by the hypervisor or the network node 150.

An example of such a hardware-based virtualization technology is SR-IOV (Single Root Input/Output Virtualization). SR-IOV may be based on self-virtualization of the network node 150, i.e., virtualization logic is predominantly provided by the network node 150 and not the VMM. For instance, the network node 150 may be able to perform filtering or Ethernet bridging to de-multiplex incoming traffic to a number of queues, or host endpoints. For instance, the hypervisor may virtualize the configuration space of the network node 150 and give limited access to parts of the IO address space. SR-IOV may provide an extension to an PCI configuration space of the network node 150 enabling an enumeration of VFs. It may also build on the Address Translation Services to translate DMA (Direct Memory Access) addresses to host addresses. A physical device of the network node 150 may have one or more physical functions (PFs), each of which may provide several VFs.

SR-IOV may provide several benefits over other virtualization technologies, including improved performance, reduced overhead, and increased flexibility. By allowing virtual machines to access a physical NIC (network interface controller) directly, SR-IOV may reduce the overhead associated with network I/O virtualization and improves network throughput and latency. SR-IOV may also provide more flexibility in network resource allocation, allowing virtual machines to be assigned dedicated VFs with guaranteed bandwidth and Quality of Service (QoS) levels. SR-IOV may therefore be beneficial for a use in data center environments where high-performance networking is required, such as in cloud computing, virtual desktop infrastructure (VDI), and high-performance computing (HPC) applications.

Typically, the number of VFs is limited. For instance, PCIe endpoint devices and SR-IOV virtual functions from a particular PCIe bus may be assigned up to a maximum of 15 domains. The PCIe resources, such as interrupt vectors for each PCIe bus, may be divided among the root domain and I/O domains. As a result, the number of VMs (or devices) that can be assigned to a particular resource (e.g., in form of an I/O domain) is likewise limited.

Server hardware and edge client devices like data center servers, IOT edge compute platforms, PC (personal computer) and laptop industry may increasingly have a high demand for hardware virtualization support for IO devices such as PCI interfaces, which is opposed to the limitation of maximum virtual PCI interface (virtual functions) which can be supported by hardware. SR-IOV may provide efficient native sharing of I/O devices with virtual machines for enhancing I/O performance, but also in this case sharing of I/O devices is limited by number of virtual functions exposed by a physical function of respective PCI hardware resources. Due to a reduction of VMM overheads and increasing power efficiency through microarchitecture and multi-core processors, the number of VMs per server is increasing. Thus, there may be a demand for scalable accesses to a resource of a network node.

Further, in increasing dynamic environments with a multitude of VMs requesting access to a resource as well as constantly changing VMs and respective requests and requirements, a conventional assignment of VMs to virtual functions may be too inflexible or provide too little manageability to cope with these dynamic environments. This may lead to a lack of RDT (Resource Director Technology) support, e.g., for enabling negotiations and guarantees of service-level agreements (SLA), causing SLA violations and thereby significantly limiting the adoption of such technologies in a public cloud infrastructure. There may conventionally be no dynamic resource partitioning or management available for SR-IOV VFs in a public cloud multi-tenant instances deployment.

By contrast, the apparatus 100 may overcome such hurdles in the following manner. The processing circuitry 130 may check the availability of virtual functions of the resource. If it is determined that the number of available virtual functions falls below the above-mentioned predefined threshold, the processing circuitry 130 is further configured to emulate and/or para virtualize a physical function associated to the resource.

The physical function may be a hardware component of the network node 150, such as a network adapter, which provides a primary interface between the hardware component and the host computer's operating system. It may be a function of a network node that is directly accessible by the host computer's operating system and applications. It may be a logical entity that provides access to hardware resources of the network node 150, e.g., input/output ports, memory buffers, and interrupt request lines. The physical function may have created multiple VFs including the above-mentioned VFs associated to the resource. The physical function may be responsible for managing the creation and allocation of the VFs, and for enforcing QoS policies and security controls. The physical function may, in some examples, be a physical function provided by a SR-IOV device, as described above.

The predefined threshold may be selected according to the target application, e.g., such that a certain occupancy of the virtual functions is tolerated without further actions. For instance, the predefined threshold may be selected such that 10%, 30%, 50%, 80%, 100%, or alike of the maximum number of virtual functions can be used in a conventional way. Alternatively, the predefined threshold may be selected such that even with a full availability of virtual functions, the use of the physical function is to be triggered. The selection of the predefined threshold may be done such that, when the number of available VFs reaches it or falls below, the resource is in demand at that time and evasion to additional accesses to the resources are desired, be it for expanding the number of VMs that can access the resource, for keeping clear VFs in case of a high-priority request to access the resource or for enabling negotiations between VMs for the remaining VFs and emulated and/or para virtualized physical functions.

The emulation and/or para virtualization may be a software-based virtualization, unlike the hardware-based virtualization provided by the virtual functions. The emulation and/or para virtualization may be virtualizations performed by the hypervisor, for instance. Emulation may be a virtualization technology that enables a VM (called the guest) to run software designed for the use of the resource via the physical function (called the host), by creating a software environment that mimics the hardware and software of the physical function. The para-virtualization may be a virtualization technology that enables multiple virtual machines to run on a single physical function by allowing them to share access to the physical function. This may be achieved by modifying the guest operating system to be aware of the virtual environment and to interact directly with the host's hardware resources.

The processing circuitry 130 is further configured to provide access to the resource via the emulated and/or para virtualized physical function for the virtual machine. In this manner, the apparatus 100 may extend the number of possible accesses to the resource by VMs, spare virtual functions for high-priority accesses and/or enable the above-mentioned negotiability. Further, the apparatus 100 may help complying with QoS policies, SLAs and alike. Unlike conventional systems where VMs are given access to the virtual functions under first-come first-serve principles, and any VM finding completely occupied virtual functions is rejected and not given any access to the resource, the apparatus 100 may provide the basis for prioritization-based assignment of an access to the resource and an extension of the availability of the resource.

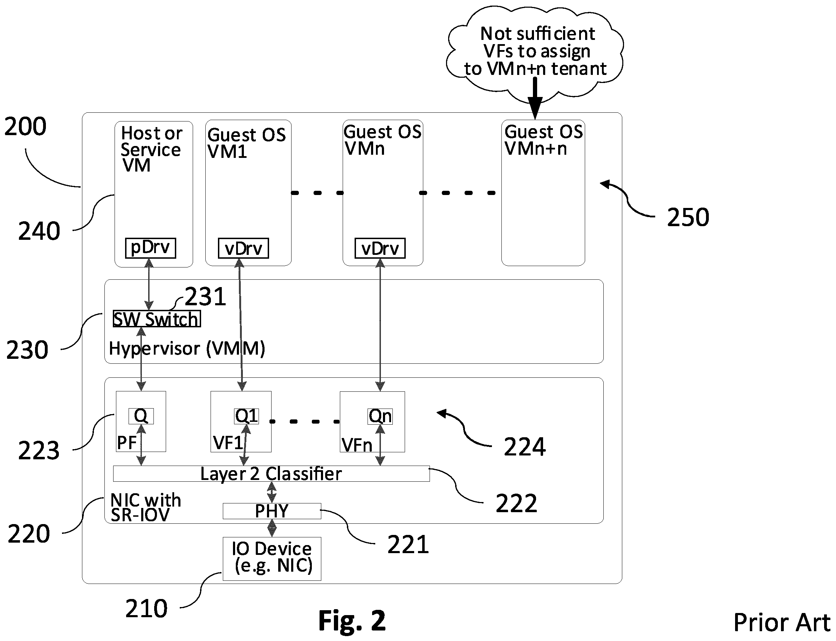

An example of an architecture of a conventional SR-IOV device 200 is illustrated by **Fig. 2****.** The conventional SR-IOV device 200 comprises an IO device 210 such as a NIC managing a network node. In a first layer 220, the SR-IOV device 200 provides a PHY (physical layer) 221, a layer-2 classifier 222 which is an engine to forward Ethernet frames to their corresponding output ports, a physical function 223 and multiple virtual functions 224 derived from the physical function 223. In a virtualization layer 230, e.g., in a VMM or hypervisor environment, the SR-IOV device 200 provides a software switch 231 which gives a host or a service virtual machine 240 access to a resource of the network node. Further, there are multiple guest OS or VMs 250. Some of the VMs 250 have a direct access to the resource via the VFs 224. Since all VFs 224 are occupied, other VMs 250 are rejected. Existing architectures of IO virtualization for the SR-IOV device 200 may lead to a limitation since the SR-IOV device 200 cannot negotiate/accommodate a new onboarding tenant due to limited virtual functions. By contrast, the apparatus 100 may enable an extension of the maximum allowable accesses of the resource.

Referring back to Fig. 1, the interface circuitry 120 may, in some examples, be configured to receive an SLA of the virtual machine. The interface circuitry 120 may, e.g., receive the SLA from the computing system 110, from the VM or from an external device via any communicative coupling. In other examples, the processing circuitry 130 may determine the SLA from specifications of the access request or by negotiations with the VM. The SLA may be any agreement about a service provided by the computing system 110 (e.g., the provision of the access) between two or more parties, e.g., between a service provider (providing the service on the computing system 110) and a user (VM) sending the request.

The SLA may be, for example, a costumer-based, service-based or multilevel-based SLA. The apparatus 100 may in some examples further exhibit the capability (e.g., on demand of the (cloud) service provider) to expose a specific application SLO (service-level objective), e.g., to a user for negotiating the SLA.

The processing circuitry 130 may further be configured to determine at least one of a resource tolerance and a priority of the virtual machine based on the SLA. For example, the processing circuitry 130 may be configured to determine the resource tolerance by determining at least one of a rate control, a packet prioritization, a bonding option, a fault tolerance and a migration tolerance of the virtual machine.

For instance, the resource tolerance (application tolerance) may be specified by the VMs. It may be, e.g., a factor with a range of 0 to 1. It may represent a tolerance to potential change in the SLA regarding access to a resource of the network node 150. Factor=0 may indicate that the VM cannot tolerate any change in the resource while factor=1 may indicate that the VM is flexible to any change to other resources. An example implementation of the resource tolerance may be the function App_Tolerance_QoS = FUNC_MAPPER (rate_control, packet_prioritization, fault_tolerance, bonding, scheduling, migration_tolerance, reserved), where migration tolerance may indicate the tolerance to migrate to a different network node in case of resource constraints. This includes halting processes in the App/VM (typically milli-seconds scale) till a negotiation with a different network node is successful.

The processing circuitry 130 may further be configured to determine whether a virtual function associated to the resource or the physical function is to be provided to the virtual machine based on the at least one of the resource tolerance and the priority and, if it is determined that the physical function is to be provided to the virtual machine, emulate and/or para virtualize the physical function. This may allow the processing circuitry 130 to have an increased controllability over the usage of the resource. For instance, a VM with a higher priority may be preferred in the provision of a virtual function, whereas a VM with lower priority may be assigned an emulated/para virtualized physical function. In this way, the apparatus 100 may prevent denials of service when a resource is requested, especially when the requesting VM is of high priority. Low priority VMs may however be served with an access through the emulated/para virtualized physical function.

In case an SLA is received, the processing circuitry 130 may in some examples be configured to schedule usage of the resource by the virtual machine based on the at least one of the resource tolerance and the priority and provide access to the resource for the virtual machine based on the scheduled usage of the resource. Thus, the priorities and/or the resource tolerances of the requesting VMs may be reflected by the scheduling. For example, a high resource tolerance may lead to flexibilities in the scheduling whenever experiencing a resource constraint. High priorities may likewise lead to a privileged position in the resource scheduling. For instance, the processing circuitry 130 may comprise a scheduler which assigns and configured the resource. For instance, the scheduler may generate and dynamically adapt a schedule (e.g., a timeline of access, use and release of the resource) and/or a configuration of the resource taking into consideration the priorities and the resource tolerances, in order to achieve the best QoS. The schedule may then be enforced by a resource control of the computing system 110. For scheduling the access to the resource, the processing circuitry 130 may perform any scheduling technique, such as priority, multilevel, round-robin, pre-emptive and/or cooperative scheduling.

Other or further factors may be taken into account for scheduling of the usage of the resource. For instance, the processing circuitry 130 may be configured to determine at least one of a number of emulations and/or para virtualizations of the physical function, a respective capability of the emulations and/or para virtualizations, an expected QoS of the usage of the resource and a risk of the usage of the resource.

The apparatus 100 may provide a Resource Director Technology for SR-IOV Virtual Functions for software-configurable VFs in a PCI device. The apparatus 100 may provide a hybrid software emulation by extending the limit of number of virtual functions supported by a SR-IOV device physical function through para virtualization or software emulation implementation of a physical function exposed by SR-IOV device. Once the para virtualization or software emulation is done by the hypervisor or the service OS for a physical function, the SR-IOV device may be shared among other guest virtual machines, those who have no access to a virtual function due to unavailability of virtual functions. For example, as per specification of the SR-IOV support, an example of an SR-IOV device may support a maximum of eight virtual functions. The hypervisor (VMM) may maintain a resource table of virtual functions and implement a state machine control logic and a respective priority assigned to guest virtual machines, e.g., depending on the life cycle and time critical workloads.

For security reasons, the processing circuitry 130 may be configured to access a list of trustworthy virtual machines stored in a blockchain, determine whether the virtual machine is in the list and, if it is determined that the virtual machine is not in the list, deny access to the resource. Using a blockchain-based system to check the trustworthiness of a guest virtual machine can offer several advantages, including decentralized trust, i.e., the verification of the VM would rely on a decentralized network of nodes to reach consensus on the validity of the guest VM's credentials, this means that no single entity would have complete control over the verification process, making it less vulnerable to tampering or manipulation. Further advantages may be an immutable record-keeping, an efficient verification and reduced risk of running untrusted or malicious guest VMs.

In a multitenant environment, a plurality of VMs may be present. The interface circuitry 120 may then receive a plurality of requests of a plurality of virtual machines to access the resource. In some examples, the processing circuitry 120 may be configured to negotiate a respective SLAs with the plurality of virtual machines for the access to the resource and provide access to the resource via the emulated and/or para virtualized physical function for the plurality of virtual machines based on the negotiated SLAs. The negotiability may be implemented by providing an interface to the plurality of VMs for negotiating the usage of the resource by offering and bidding, e.g., through smart contracts.

For achieving a highly dynamical manageability of the resource accesses, the apparatus 100 may further detect hot-plugs or hot-unplugs. Hot-plug may be a hardware feature that enables the addition of new hardware components to the computing system 110 while it is running, without the need to shut down or reboot. Hot-plug devices may be designed to be physically inserted or removed from their connectors while the system is powered on, and the system automatically detects and configures the new hardware component. The hardware component may provide new resources or forming new network nodes in the computing system 110. Hot-unplug may be the process of removing a hardware component from a system while it is running, without the need to shut down or reboot the system. Hot-unplug devices may be designed to be physically removed from their connectors while the computing system 110 is powered on, and the computing system 110 automatically detects and removes the hardware component from its configuration.

In these cases, the processing circuitry 120 may be configured to determine such a hot-plug or hot-unplug of the resource or a further resource. This may change the number of available access channels: A hot-plug may enlarge the number of available resources whereas a hot-unplug may decrease the number of available resources. The processing circuitry 120 may therefore reevaluate the access to the resource and, e.g., adapt the access requirements or the scheduling. Therefore, the processing circuitry 120 may be configured to determine the number of available virtual functions based on the determined hot-plug or hot-unplug. The processing circuitry 120 may be further configured to negotiate the SLAs based on the determined number of available virtual functions.

In order to improve the scheduling, e.g., in terms of QoS, the apparatus 100 may track the usage of the resource, store the tracked data and use it for a machine-learning feedback, for instance. In some examples, the processing circuitry 120 may be configured to monitor a metric of the emulated and/or para virtualized physical function and store the monitored metric. For instance, the processing circuitry 120 may be configured to determine a QoS of the usage of the resource via the emulated and/or para virtualized physical function and to store the determined quality of service.

Further, a dedicated driver may be provided for the access through the emulated and/or para virtualized physical function. For instance, the processing circuitry 120 may be configured to, in response to receiving the request of the virtual machine, send a driver for usage of the emulated and/or para virtualized function to the virtual machine. In case of a para virtualization, the guest operating system of the VM may be modified by the driver to be aware of the virtual environment and to interact directly with the host's hardware resources, rather than emulating them. To enable this communication between the guest operating system and the host's hardware resources, a special software component, e.g., a para-virtualization driver may be required. The para-virtualization driver may provide an interface between the guest operating system and the hypervisor. In case of an emulation, the guest operating system may interact with the emulated physical function by installing a special software component, e.g., an emulated device driver. The emulated device driver may provide an interface between the guest operating system and the virtual machine's emulated hardware devices for translating the guest operating system's hardware access requests into the appropriate format for the virtual machine's emulated hardware devices.

In summary, the proposed apparatus 100 may involve an extension of the limit of number of virtual functions, e.g., supported by an SR-IOV device's physical function, through para virtualization or software emulation of a physical function. The SR-IOV device may then be shared among other guest virtual machines who have not assigned virtual functions due to their unavailability. The extended virtual functions may be exposed to the RDT manager having a bi-directional interface for negotiability that tenants/guest OS can use for negotiating SLAs. With the help of the negotiated SLAs, an orchestrator may increase the efficiency of the node/fleet management, e.g., along with reward-based system for tenants/apps which get micropayments for SLA negotiations.

The apparatus 100 may improve the scalability of a data center, for instance, with no compromise on SLAs. It may dynamically negotiate resource allocations, e.g., based on tolerance factors prescribed by a requesting VM or its application. This may help achieve effective colocation and improved fleet-level utilization at cluster level with better and guaranteed performance for all the tenants, resulting in a reduction of an overall total cost of ownership at datacenter level. Further, the RDT may effectively handle tenants that require alternate resource requirements at runtime - which is prevalent in public cloud environment - resulting in higher fleet-level utilization. Further, the apparatus 100 may have the capability to over-subscribe virtual functions support on SR-IOV devices (e.g., XPU, processing units of any architecture) without denial of service and with appropriate QoS to manage committed SLAs via extensions.

The apparatus 100 may provide a hybrid IO virtualization for scalable architecture implementation, e.g., in SR-IOV devices, e.g., ethernet, graphics processing units in data centric servers, IoT Edge compute and client devices environment. The apparatus 100 may enhance SR-IOV device virtualization capabilities to accommodate more guest VM's with fewer number of IO devices. Environments supporting high number of cores may greatly benefit of the apparatus 100 since the herein described software extension can be combined with a hardware acceleration (virtual functions). The apparatus 100 may have benefits for server and client workloads which do not have hard latency requirements such as TSN (Time Stamp Network) Ethernet Cards.

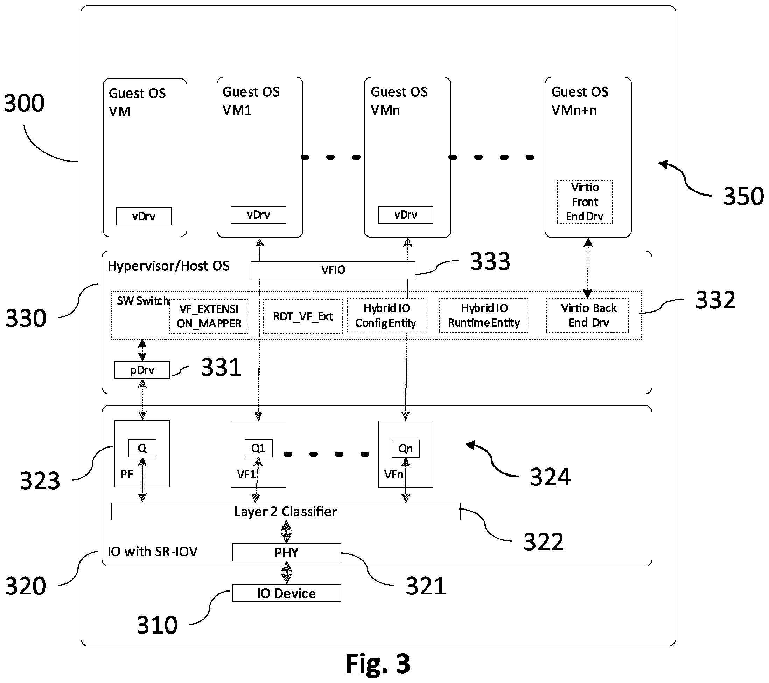

An example of the apparatus 100 being implemented in an SR-IOV environment is illustrated by **Fig. 3.** Fig. 3 shows an example of an architecture of an SR-IOV device 300. The SR-IOV device 300 comprises an IO device 310 providing an interface to a network node. In a first layer 320, the SR-IOV device 300 provides a PHY 321, a layer-2 classifier 322, a physical function 323 and multiple virtual functions 324 derived from the physical function 323. In a virtualization layer 330, e.g., in a host operation system or hypervisor environment, the SR-IOV device 300 provides a physical driver 331 coupled to the physical function 323 and a software switch 332. The software switch 332 provides a virtual function extension mapper, an RDT virtual function extension, a hybrid IO configuration entity, a hybrid IO runtime entity and a virtualization IO backend driver. Through a virtual function IO 333, the virtual functions 324 can still be directly used by VMs 350 but under control of the hypervisor. When a number of occupied virtual functions exceeds a threshold, the SR-IOV device 300 emulates/para virtualizes the physical function 323 through the software switch 332. A VM 350 may, for instance, install a virtualized IO frontend driver which helps the VM 350 to achieve compatibility with the backend driver provided by the hypervisor.

The SR-IOV device 300 may provide a Resource Director Technology for SRIOV Virtual Functions by extending the limit of number of virtual functions 324 supported by the physical function 323. This is done through para virtualization or software emulation of the physical function 323 exposed by the SR-IOV device 300. The virtual function extension mapper may be defined by a scheduling function F such that VF_EXTENSION_MAPPER = F ((R, W), Tx, A, QoS, M), where VF _EXTENSION_MAPPER () is a function that determines the number and the capability of the emulated and/or para virtualized accesses to a resource of the network node based on the limited available physical functions, QoS represents the expected Quality of Service, e.g., QoS may have parametrized cost such as attributes like performance, transaction clearing cost, etc., M represents the machine learning feedback to be incorporated for a next iteration of scheduling calculations, W represents the set of applications A that complies with allowed configuration list known to be trustworthy. For example, the allowed list may be published on a public blockchain where security operations may be an attestation check, antivirus scanning, firewall scan etc., R represents the risk that is at stake, for example, the value or opportunity cost resulting from performing the transaction Tx.

The hypervisor or VMM or an orchestrator may determine an SLA priority to be honored for a VM 350 (user or system application) requesting access to the resource and input the priority to a VF factory method. Based on SLA priority and an application tolerance feedback, the SR-IOV device 300 may decide to whom to assign a VF 324 or PF 323, whereas an SLA interface may be bi-directional to the operating system, the VMM and the VMs 350 (guests), so the SLA and the resource access can be negotiable at run-time.

The emulated or para virtualized physical functions (extended virtual functions) may be exposed to an RDT manager with a bi-directional interface that tenants/guest OS can use to dynamically negotiate SLAs for efficient node and fleet management. Background applications or non-time critical applications or workloads running on the host or guest VM may be direct beneficiary of this VF function extension method. The RDT manager may, for example, use an RDT VF extension, such as the function RDT_VF_Ext = FUNC_FACTORY (PF, VF_EXTENSION_MAPPER(R, W, Tx, A, QoS)). The function implementation may use emulation method by sharing PF interface, named as VF extension. It may use a state machine implementation to share PF interface among VMs 350 or applications based on their SLA priority and requirements. Due to factory method implementation, a VF-like interface can be created and assigned at runtime to applications and VMs 350.

The SR-IOV device 300 may provide a software switch 332 including a hybrid (hybridge) IO configuration to setup a software emulation control, using an interface driver for the guest VM 350 and the host operating system. The driver may provide an interface to submit workload of guest VM 350 to host VM. The software switch 332 may include a hybrid IO runtime entity which takes care of scheduling guest VM workloads on the host OS or hypervisor on time sharing basis. Guest virtual machines 350 with medium or low priority may be assigned a software emulated IO interface or handle provided by the service OS to execute their workloads. Using hybrid software emulation implementation for SR-IOV device 300 may lead to an extension to other virtual machines beyond limitation of available virtual functions of the SR-IOV device 300.

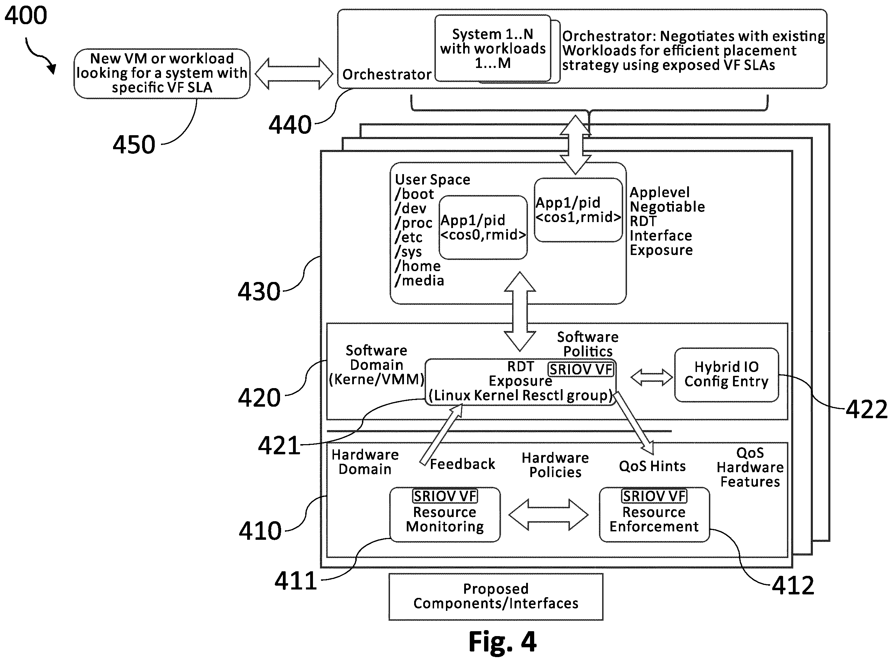

**Fig. 4** illustrates an example of an architecture 400 for RDT. The architecture 400 implements a hardware domain 410 underlying a software domain 420. The hardware domain is configured with a resource monitoring 411 of a resource of a network node and a resource enforcement 412. The resource enforcement 412 is based on QoS considerations and hardware policies.

The software domain 420 comprises an RDT component 421 and a hybrid IO configuration entry 422. The RDT component 421 exposes a resource to applications of an application level 430. The RDT component 421 receives information about the resource from the resource monitoring 411 and sends QoS hints to the resource enforcement 412. An orchestrator 440 negotiates with a new VM 450 the resources for efficient placement strategy using exposed SLAs.

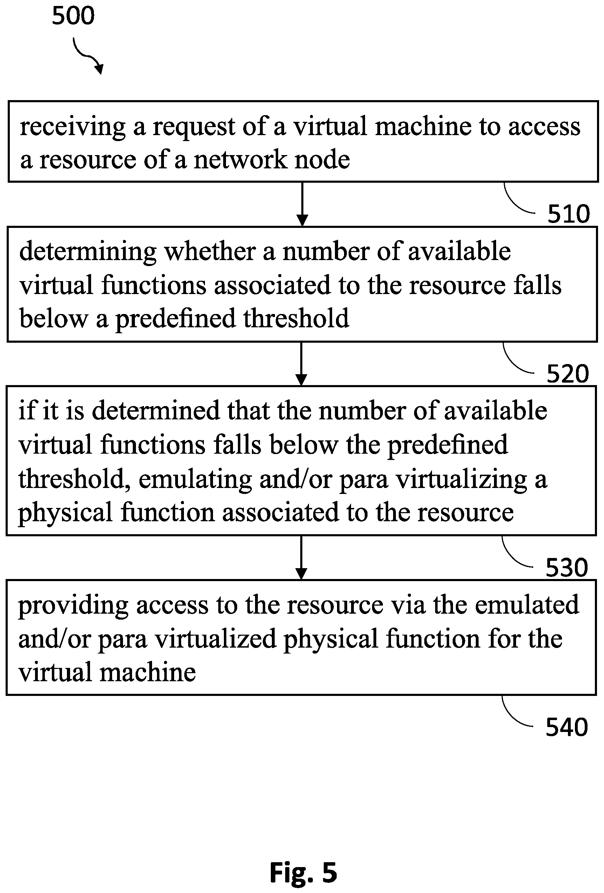

**Fig. 5** illustrates a flowchart of an example of a method 500. The method 500 comprises receiving 510 a request of a virtual machine to access a resource of a network node, determining 520 whether a number of available virtual functions associated to the resource falls below a predefined threshold and, if it is determined that the number of available virtual functions falls below the predefined threshold, emulating 530 and/or para virtualizing 530 a physical function associated to the resource. The method 500 further comprises providing 540 access to the resource via the emulated and/or para virtualized physical function for the virtual machine.

The method 500 may further comprise receiving an SLA of the virtual machine, determining at least one of a resource tolerance and a priority of the virtual machine based on the SLA and determining whether a virtual function associated to the resource or the physical function is to be provided to the virtual machine based on the at least one of the resource tolerance and the priority. The method 500 may further comprise, if it is determined that the physical function is to be provided to the virtual machine, emulating and/or para virtualizing the physical function.

In some examples, the method 500 may comprise receiving an SLA of the virtual machine, determining at least one of a resource tolerance and a priority of the virtual machine based on the SLA and scheduling usage of the resource by the virtual machine based on the at least one of the resource tolerance and the priority. The method 500 may further comprise providing access to the resource for the virtual machine based on the scheduled usage of the resource.

In other examples, the method 500 may comprise scheduling usage of the resource by determining at least one of a number of emulations and/or para virtualizations of the physical function, a respective capability of the emulations and/or para virtualizations, an expected quality of service of the usage of the resource and a risk of the usage of the resource and providing access to the resource for the virtual machine based on the scheduled usage of the resource.

In yet further examples, the method 500 may comprise receiving a plurality of requests of a plurality of virtual machines to access the resource, negotiating respective SLAs with the plurality of virtual machines for the access to the resource and providing access to the resource via the emulated and/or para virtualized physical function for the plurality of virtual machines based on the negotiated SLAs.

More details and aspects of the method 500 are explained in connection with the proposed technique or one or more examples described above (e.g., Figs. 1a and 1b). The method 500 may comprise one or more additional optional features corresponding to one or more aspects of the proposed technique, or one or more examples described above.

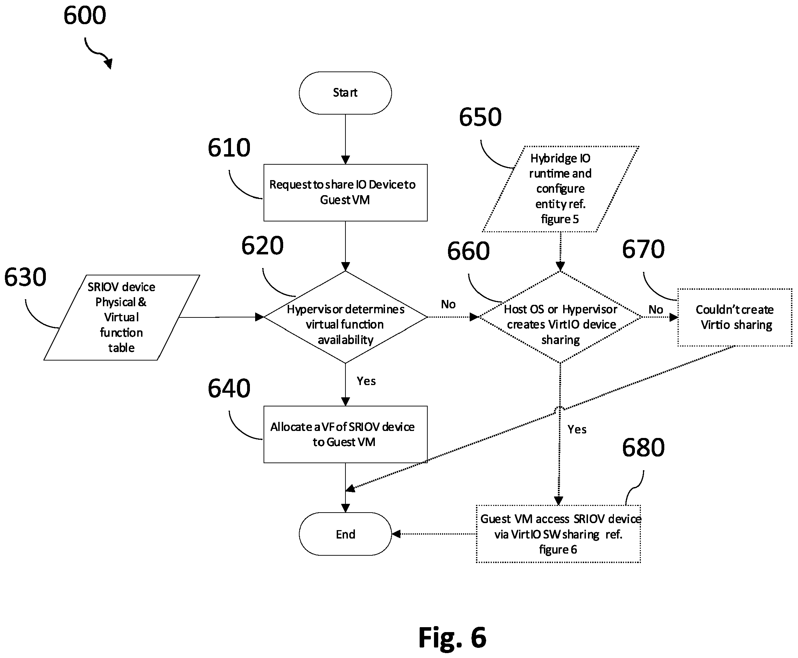

**Fig. 6** illustrates a flowchart of an example of a method 600 for providing access to a resource of an IO device. The method 600 comprises requesting 610, by a VM, to share an IO device with the VM, i.e., requesting an access to the resource. The method 600 comprises determining 620, by a hypervisor, an availability of virtual functions, e.g., determining whether a number of available virtual functions associated to the resource exceeds a predefined threshold. The method 600 further comprises receiving 630, at the hypervisor, a table of physical and virtual functions of the IO device. The hypervisor, VMM or host OS may maintain this resource table. If it is determined that availability is given, the method 600 comprises allocating 640 a virtual function to the VM and end process. If there are not enough virtual functions available, the method 600 comprises configuring 650 IO sharing, e.g., as per method 700 described below.

The host OS or hypervisor may get input from hybrid IO configuration components and the RDT manager to configure the IO sharing using a backend driver for the service VM and a frontend driver for the guest VM. Thus, the method 600 proceeds with creating 660 the IO sharing by emulating and/or para virtualizing a physical function associated to the resource. In case the creation of the IO sharing failed, the method 600 comprises cancelling 670 the process. In case the creation of the IO sharing succeeded, the method 600 comprises providing 680 access to the IO device, e.g., as per method 800 described below. For instance, the hybrid IO runtime may facilitate the scheduling of VM accesses, by the host OS or VMM.

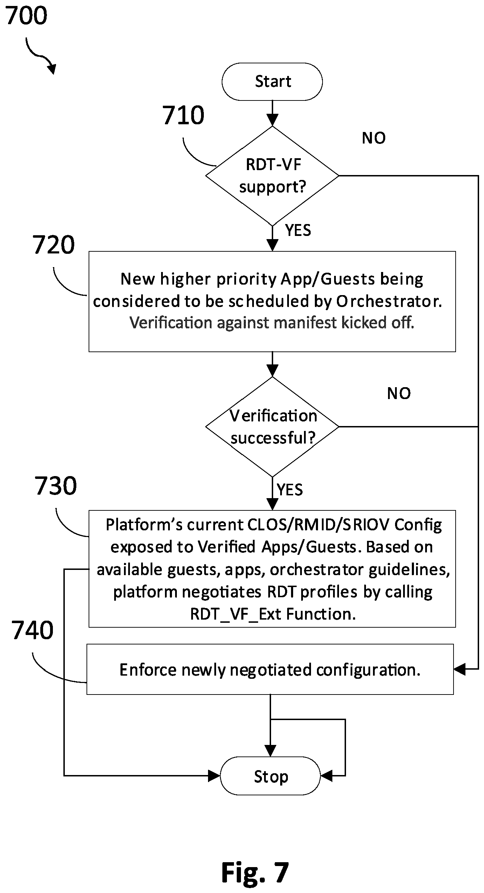

**Fig. 7** illustrates a flowchart of an example of a method 700 for a configuration of a network node. The method 700 comprises determining 710 whether RDT support is provided by the network node. If so, in block 720, new higher priority VMs (applications or guests) are considered to be scheduled by an orchestrator. A verification using a list of trustworthy VMs is performed. If the verification was successful, in block 730, the current class of service, resource management identifier and configuration of the network node (SR-IOV device) is exposed to the verified applications and guest VMs. Based on the guests, applications, orchestrator guidelines and available hardware, RDT profiles are negotiated with the VMs, e.g., by calling an RDT_VF_Ext Function, as explained above. In block 740, the newly negotiated configuration is enforced.

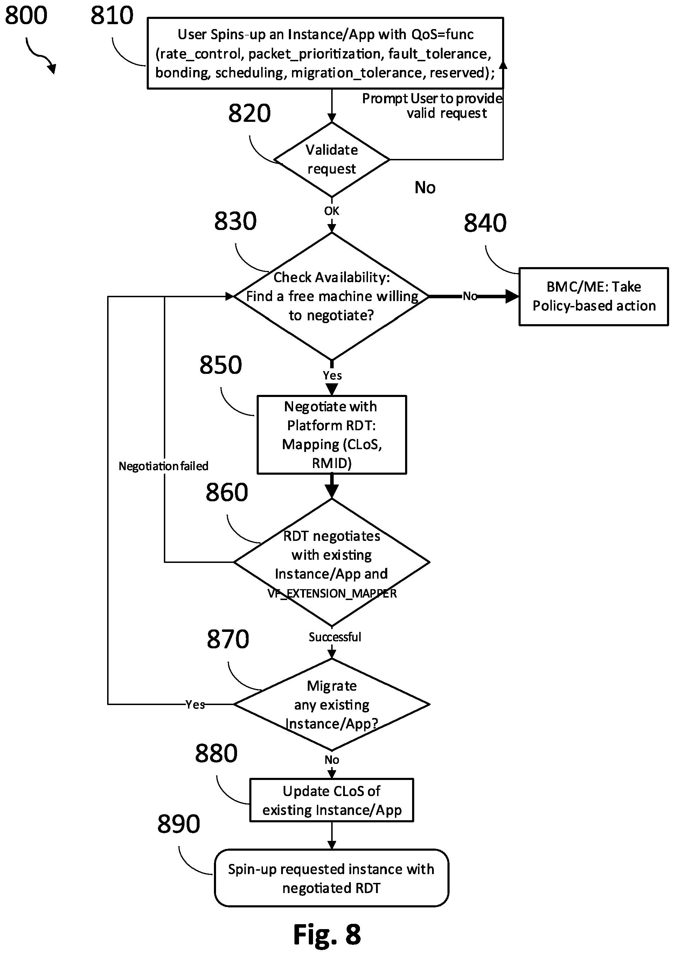

**Fig. 8** illustrates a flowchart of an example of a method 800 for a negotiation between VMs requesting access to a resource. In block 810, the user or guest OS instance or application triggers the negotiation by providing a QoS information, e.g., based on the above-mentioned QoS function. In block 820, the request of the user is validated, or the user is prompted to provide a valid request for negotiation. In block 830, the availability of other VMs willing to negotiate. If there is no available VM, in block 840, policy-based actions are taken. If there is an available VM, in block 850, an RDT manager provides an interface for the negotiations between the requesting VM and the other VM. In Block 860, the negotiations are performed based on the extended virtual functions (emulated and/or para virtualized physical functions of the resource). The RDT manager may enable the negotiations using RDT_VF_Ext and VF _EXTENSION_MAPPER for availability of VFs and assignment of the resource. In block 870, the RDT manager checks whether existing instances or applications can be migrated based on a migration tolerance defined by the instance or application. If so, the method 800 resumes to block 830. If not, in block 880, the resource usage is rescheduled by updating the class of service of the instances or applications. In block 890, the requested instance is spin-up (enforced) with negotiated RDT.

Methods and apparatus as described herein may extend the limit of number of virtual functions, e.g., supported by an SR-IOV device's physical function, through para virtualization or software emulation of a physical function. The SR-IOV device may then be shared among virtual machines who have not assigned virtual functions due to their unavailability. The extended virtual functions may be exposed to the RDT manager having a bi-directional interface for negotiability that tenants/guest OS can use for negotiating SLAs. With the help of the negotiated SLAs, an orchestrator may increase the efficiency of the node/fleet management, e.g., along with reward-based system for tenants/apps which get micropayments for SLA negotiations.

In the following, some examples of the proposed technique are presented:
An example (e.g., example 1) relates to an apparatus, the apparatus comprising interface circuitry, machine-readable instructions, and processing circuitry to execute the machine-readable instructions to receive a request of a virtual machine to access a resource of a network node, determine whether a number of available virtual functions associated to the resource falls below a predefined threshold, if it is determined that the number of available virtual functions falls below the predefined threshold, emulate and/or para virtualize a physical function associated to the resource, and provide access to the resource via the emulated and/or para virtualized physical function for the virtual machine.

Another example (e.g., example 2) relates to a previous example (e.g., example 1) or to any other example, further comprising that the machine-readable instructions comprise instructions to receive a service level agreement, SLA, of the virtual machine, determine at least one of a resource tolerance and a priority of the virtual machine based on the SLA, determine whether a virtual function associated to the resource or the physical function is to be provided to the virtual machine based on the at least one of the resource tolerance and the priority, and if it is determined that the physical function is to be provided to the virtual machine, emulate and/or para virtualize the physical function.

Another example (e.g., example 3) relates to a previous example (e.g., one of the examples 1 or 2) or to any other example, further comprising that the machine-readable instructions comprise instructions to receive a service level agreement, SLA, of the virtual machine, determine at least one of a resource tolerance and a priority of the virtual machine based on the SLA, schedule usage of the resource by the virtual machine based on the at least one of the resource tolerance and the priority, and provide access to the resource for the virtual machine based on the scheduled usage of the resource.

Another example (e.g., example 4) relates to a previous example (e.g., one of the examples 2 or 3) or to any other example, further comprising that the machine-readable instructions comprise instructions to determine the resource tolerance by determining at least one of a rate control, a packet prioritization, a bonding option, a fault tolerance and a migration tolerance of the virtual machine.

Another example (e.g., example 5) relates to a previous example (e.g., one of the examples 1 to 4) or to any other example, further comprising that the machine-readable instructions comprise instructions to schedule usage of the resource by determining at least one of a number of emulations and/or para virtualizations of the physical function, a respective capability of the emulations and/or para virtualizations, an expected quality of service of the usage of the resource and a risk of the usage of the resource, and provide access to the resource for the virtual machine based on the scheduled usage of the resource.

Another example (e.g., example 6) relates to a previous example (e.g., one of the examples 1 to 5) or to any other example, further comprising that the machine-readable instructions comprise instructions to access a list of trustworthy virtual machines stored in a blockchain, determine whether the virtual machine is in the list, and if it is determined that the virtual machine is not in the list, deny access to the resource.

Another example (e.g., example 7) relates to a previous example (e.g., one of the examples 1 to 6) or to any other example, further comprising that the machine-readable instructions comprise instructions to receive a plurality of requests of a plurality of virtual machines to access the resource, negotiate respective service level agreements, SLAs, with the plurality of virtual machines for the access to the resource, and provide access to the resource via the emulated and/or para virtualized physical function for the plurality of virtual machines based on the negotiated SLAs.

Another example (e.g., example 8) relates to a previous example (e.g., one of the examples 1 to 7) or to any other example, further comprising that the machine-readable instruction comprise instructions to determine a hot-plug or a hot-unplug of the resource or a further resource, and determine the number of available virtual functions based on the determined hot-plug or hot-unplug.

Another example (e.g., example 8) relates to a previous example (e.g., to a combination of the examples 7 and 8) or to any other example, wherein the machine-readable instructions comprise instructions to negotiate the SLAs based on the determined number of available virtual functions.

Another example (e.g., example 10) relates to a previous example (e.g., one of the examples 1 to 9) or to any other example, further comprising that the machine-readable instructions comprise instructions to monitor a metric of the emulated and/or para virtualized physical function and store the monitored metric.

Another example (e.g., example 11) relates to a previous example (e.g., one of the examples 1 to 10) or to any other example, further comprising that the machine-readable instructions comprise instructions to determine a quality of service of the usage of the resource via the emulated and/or para virtualized physical function and to store the determined quality of service.

Another example (e.g., example 12) relates to a previous example (e.g., one of the examples 1 to 11) or to any other example, further comprising that the physical function associated to the resource is a physical function provided by a single root input/output virtualization device.

Another example (e.g., example 13) relates to a previous example (e.g., one of the examples 1 to 12) or to any other example, further comprising that the resource is a bandwidth of a PCIe bus.

Another example (e.g., example 14) relates to a previous example (e.g., one of the examples 1 to 13) or to any other example, further comprising that the machine-readable instructions comprise instructions to, in response to receiving the request of the virtual machine, send a driver for usage of the emulated and/or para virtualized physical function to the virtual machine.

An example (e.g., example 15) relates to a method, comprising receiving a request of a virtual machine to access a resource of a network node, determining whether a number of available virtual functions associated to the resource falls below a predefined threshold, if it is determined that the number of available virtual functions falls below the predefined threshold, emulating and/or para virtualizing a physical function associated to the resource, and providing access to the resource via the emulated and/or para virtualized physical function for the virtual machine.

Another example (e.g., example 16) relates to a previous example (e.g., example 15) or to any other example, further comprising receiving a service level agreement, SLA, of the virtual machine, determining at least one of a resource tolerance and a priority of the virtual machine based on the SLA, determining whether a virtual function associated to the resource or the physical function is to be provided to the virtual machine based on the at least one of the resource tolerance and the priority, and if it is determined that the physical function is to be provided to the virtual machine, emulating and/or para virtualizing the physical function.

Another example (e.g., example 17) relates to a previous example (e.g., one of the examples 15 or 16) or to any other example, further comprising receiving a service level agreement, SLA, of the virtual machine, determining at least one of a resource tolerance and a priority of the virtual machine based on the SLA, scheduling usage of the resource by the virtual machine based on the at least one of the resource tolerance and the priority, and providing access to the resource for the virtual machine based on the scheduled usage of the resource.

Another example (e.g., example 18) relates to a previous example (e.g., one of the examples 15 to 17) or to any other example, further comprising scheduling usage of the resource by determining at least one of a number of emulations and/or para virtualizations of the physical function, a respective capability of the emulations and/or para virtualizations, an expected quality of service of the usage of the resource and a risk of the usage of the resource, and providing access to the resource for the virtual machine based on the scheduled usage of the resource.

Another example (e.g., example 19) relates to a previous example (e.g., one of the examples 15 to 18) or to any other example, further comprising receiving a plurality of requests of a plurality of virtual machines to access the resource, negotiating respective service level agreements, SLAs, with the plurality of virtual machines for the access to the resource, and providing access to the resource via the emulated and/or para virtualized physical function for the plurality of virtual machines based on the negotiated SLAs.

Another example (e.g., example 20) relates to a non-transitory machine-readable storage medium including program code, when executed, to cause a machine to perform a method of any one of the previous examples (e.g., of one of the examples 15 to 19) or to any other example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus, the apparatus comprising interface circuitry, machine-readable instructions, and processing circuitry to execute the machine-readable instructions to:
receive a request of a virtual machine to access a resource of a network node;
determine whether a number of available virtual functions associated to the resource falls below a predefined threshold;
if it is determined that the number of available virtual functions falls below the predefined threshold, emulate and/or para virtualize a physical function associated to the resource; and
provide access to the resource via the emulated and/or para virtualized physical function for the virtual machine.

2. The apparatus of claim 1, wherein the machine-readable instructions comprise instructions to:
receive a service level agreement, SLA, of the virtual machine;
determine at least one of a resource tolerance and a priority of the virtual machine based on the SLA;
determine whether a virtual function associated to the resource or the physical function is to be provided to the virtual machine based on the at least one of the resource tolerance and the priority; and
if it is determined that the physical function is to be provided to the virtual machine, emulate and/or para virtualize the physical function.

3. The apparatus of any one of claims 1 or 2, wherein the machine-readable instructions comprise instructions to:
receive a service level agreement, SLA, of the virtual machine;
determine at least one of a resource tolerance and a priority of the virtual machine based on the SLA;
schedule usage of the resource by the virtual machine based on the at least one of the resource tolerance and the priority; and
provide access to the resource for the virtual machine based on the scheduled usage of the resource.

4. The apparatus of claim 3, wherein the machine-readable instructions comprise instructions to determine the resource tolerance by determining at least one of a rate control, a packet prioritization, a bonding option, a fault tolerance and a migration tolerance of the virtual machine.

5. The apparatus of any one of the previous claims, wherein the machine-readable instructions comprise instructions to:
schedule usage of the resource by determining at least one of a number of emulations and/or para virtualizations of the physical function, a respective capability of the emulations and/or para virtualizations, an expected quality of service of the usage of the resource and a risk of the usage of the resource; and
provide access to the resource for the virtual machine based on the scheduled usage of the resource.

6. The apparatus of any one of the previous claims, wherein the machine-readable instructions comprise instructions to:
access a list of trustworthy virtual machines stored in a blockchain;
determine whether the virtual machine is in the list; and
if it is determined that the virtual machine is not in the list, deny access to the resource.

7. The apparatus of any one of the previous claims, wherein the machine-readable instructions comprise instructions to:
receive a plurality of requests of a plurality of virtual machines to access the resource;
negotiate respective service level agreements, SLAs, with the plurality of virtual machines for the access to the resource; and
provide access to the resource via the emulated and/or para virtualized physical function for the plurality of virtual machines based on the negotiated SLAs.

8. The apparatus of any one of the previous claims, wherein the machine-readable instructions comprise instructions to:
determine a hot-plug or a hot-unplug of the resource or a further resource; and
determine the number of available virtual functions based on the determined hot-plug or hot-unplug.

9. The apparatus of any one of the previous claims, wherein the machine-readable instructions comprise instructions to negotiate SLAs based on the determined number of available virtual functions.

10. The apparatus of any one of the previous claims, wherein the machine-readable instructions comprise instructions to monitor a metric of the emulated and/or para virtualized physical function and store the monitored metric.

11. The apparatus of any one of the previous claims, wherein the machine-readable instructions comprise instructions to determine a quality of service of the usage of the resource via the emulated and/or para virtualized physical function and to store the determined quality of service.

12. The apparatus of any one of the previous claims, wherein the physical function associated to the resource is a physical function provided by a single root input/output virtualization device.

13. The apparatus of any one of the previous claims, wherein the resource is a bandwidth of a PCIe bus.

14. The apparatus of any one of the previous claims, wherein the machine-readable instructions comprise instructions to, in response to receiving the request of the virtual machine, send a driver for usage of the emulated and/or para virtualized physical function to the virtual machine.

15. A method, comprising:
receiving a request of a virtual machine to access a resource of a network node;
determining whether a number of available virtual functions associated to the resource falls below a predefined threshold;
if it is determined that the number of available virtual functions falls below the predefined threshold, emulating and/or para virtualizing a physical function associated to the resource; and
providing access to the resource via the emulated and/or para virtualized physical function for the virtual machine.
